# EUROPÄISCHE PATENTSCHRIFT

(11) **EP 3 256 286 B1**
(45) Veröffentlichungstag und Bekanntmachung des Hinweises auf die Patenterteilung: **24.07.2019**
(21) Anmeldenummer: 16705462.6
(22) Anmeldetag: 11.02.2016
(51) Int. Cl.: B23Q 1/00, B23Q 1/70, B23Q 17/00

(54) **WERKZEUGMASCHINE UND WERKZEUGMASCHINENEINHEIT**
MACHINE TOOL AND MACHINE TOOL UNIT
MACHINE-OUTIL ET UNITÉ DE MACHINE-OUTIL

(30) Priorität: 12.02.2015 DE 102015001643
(43) Veröffentlichungstag der Anmeldung: 20.12.2017
(73) Patentinhaber: Franz Kessler GmbH, 88422 Bad Buchau (DE)
(72) Erfinder: VAN SPRANG, Joachim, 88213 Ravensburg (DE)
(74) Vertreter: Otten, Roth, Dobler & Partner mbB Patentanwälte
(86) Internationale Anmeldenummer: PCT/EP2016/052921
(87) Internationale Veröffentlichungsnummer: WO 2016/128515

(56) Entgegenhaltungen:
- DE-A1- 4 201 013
- DE-C1- 10 163 089
- US-A- 5 636 949
- US-A- 5 770 936

## Beschreibung

Die Erfindung betrifft eine motorisch angetriebene Werkzeugmaschineneinheit wie ein Mehrachsendrehkopf, eine Motorspindel, einen Drehtisch oder dergleichen nach dem Oberbegriff des Anspruchs 1.

Eine solche Werkzeugmaschineneinheit ist z.B. aus dem Patentdokument US 5,770,936 bekannt.

### Stand der Technik

Bei motorisch angetriebenen Werkzeugmaschineneinheiten wie Spindeln, insbesondere Motorspindeln, Drehtischen oder Mehrachsendrehköpfen etc. gibt es im Grundsatz zwei verschiedene Lageranordnungen, wie die Rotoreinheit mit ihrer Rotorwelle in/an der Statoreinheit gelagert wird. Dies kann allerdings je nach Ausführung im Detail etwas variieren.

Bei einem ersten Lagerungsprinzip werden üblicherweise jeweils ein oder zwei Schrägkugellager sowohl vorne als auch hinten an der Rotorwelle platziert. Die Schrägkugellager, zum Beispiel in sogenannter O- oder X-Anordnung, nehmen Radialkräfte und axiale Druckkräfte auf. Die hinteren Lager nehmen Radialkräfte und axiale Zugkräfte auf.

Die zweite Möglichkeit bzw. Lageranordnung wird als sogenannte "Fest-Loslager-Kombination" bezeichnet. Hierbei werden üblicherweise die Lager derart gestaltet, dass die vordere Lagerstelle bzw. Lagereinheit als Festlager ausgebildet ist und Radialkräfte sowie Axialkräfte in beide Richtungen aufnimmt. Die hintere Lagerstelle bzw. Lagereinheit ist hier als Loslager ausgebildet und nimmt ausschließlich Radialkräfte auf. Diese "Fest-Loslager-Kombination" ist eine aus der technischen Mechanik resultierende, sehr klar strukturierte, Kraft aufteilende Anordnung.

Beispielsweise bei Werkzeugmaschinenspindeln wird häufig im hinteren Bereich der Spindel bzw. am der Werkzeug- bzw. Werkstückaufnahme entgegen gesetzten Ende der Rotorwelle das sogenannte Loslager mit Hilfe eines (einzigen) Wälz- bzw. Zylinderrollenlagers realisiert. Dieses Zylinderrollenlager besteht im Allgemeinen aus einem Innenring, einem Käfig mit integrierten Rollen bzw. Wälzkörpern und einem Außenring. Der Rollenkäfig ist entweder über den Innenring oder über den Außenring geführt und gehalten.

Diese seit mehreren Jahrzehnten praktizierte Anordnung impliziert zugleich die Unfähigkeit am hinteren Lager Kräfte axial aufzunehmen, was dazu führt, dass der größte Teil der Ausdehnungsbewegungen der Welle bzw. Rotoreinheit, unabhängig ob sie aus äußeren Kräften oder aufgrund von Wärmedehnungen bzw. Temperatureinflüssen entstehen, ausschließlich im hinteren Bereich wirken. Dies führt wiederum dazu, dass beispielsweise bei Motorspindeln es teilweise zur Axialbewegung im hinteren Bereich der gelagerten Motorwelle von mehreren zehntel Millimetern bzw. bis zu ca. einem Millimeter kommt. Üblicherweise stören derartige, im/für den Werkzeugmaschinenbereich sehr großen Längenänderungen bzw. Bewegungen an dieser Stelle jedoch nicht.

Der große Vorteil der bisherigen Fest-Loslager-Kombination bei derartigen Werkzeugmaschineneinheiten ist der, dass das Festlager, das nahe an der Werkzeugaufnahme, z.B. der Spindel sitzt, axiale Bewegungen der Spindel im vorderen Bereich auf ein Minimum reduziert. Dies führt wiederum dazu, dass das Werkzeug nur sehr geringen axialen Verlagerungen ausgesetzt ist. Dies ist vor allem im modernen Werkzeugmaschinenbau bzw. bei modernen Hochleistungsmotorspindeln oder dergleichen von enormen Vorteil, da heutzutage sehr hohe Genauigkeitsanforderungen an entsprechende Werkzeugmaschinen wie CNC-Maschinen oder dergleichen gestellt werden. Hier müssen nicht nur hundertstel Millimeter, sondern durchaus auch tausendstel Millimeter Genauigkeit eingehalten werden.

Darüber hinaus sind in den letzten Jahren zunehmende Anforderungen an die Zerspannung und insbesondere an Parametern wie Vorschub, Winkelgeschwindigkeit festzustellen. So sind zwischenzeitlich auch Werkzeuge im Einsatz, wobei während der Bearbeitung die tatsächliche Dicke bzw. Maßhaltigkeit mittels entsprechender Sensoren ermittelt und zur Steuerung der Werkzeugmaschine bzw. zur Verstellung des Werkzeugs verwendet wird. Beispielsweise sind Ultraschallsensoren im Einsatz, die auf/an der Rotorwelle bzw. im/am (rotierenden) Werkzeug angeordnet sind. Hierfür werden in den letzten Jahren zunehmend elektrische Drehdurchführungen bzw. Energieübertragungssysteme verwendet, die elektrische Energie vom statischen Teil bzw. vom Stator der Werkzeugmaschineneinheiten auf den rotierenden Teil bzw. den Rotor der Werkzeugmaschineneinheiten übertragen.

Dies wird zum Beispiel mit Übertragungsspulen realisiert, die im Wesentlichen aus zwei in Wirkverbindung stehenden Spulen (mit Ferritkernen) bestehen und zwischen denen ein fest eingestellter bzw. definierter Spalt vorhanden ist. Die Maßhaltigkeit des Spaltes ist sehr wichtig, um die Energieübertragung und/oder die Signalübertragung nicht zu beeinträchtigen. Deshalb sind diese Übertragungsspulen bislang im vorderen Bereich des Werkstücks bzw. des vorderen Festlagers angeordnet, da bislang nur hier die Maßhaltigkeit des Spaltes gewährleistet werden kann.

Nachteil ist jedoch, dass im vorderen Bereich des Werkzeugs die Gefahr besteht, dass durch Staub, Späne, Kühlschmiermittel etc. Beeinträchtigungen bzw. Verschmutzungen der Energieübertragungseinheit und vor allem des Spaltes und somit u.a. der Signalübertragung entstehen können. Demzufolge können Fehler bei der Steuerung des Werkzeugs und somit Bearbeitungsungenauigkeiten die Folge sein.

So nimmt die Übertragungseinheit auch Bauraum ein, der im Bereich der Werkzeugbearbeitung sehr stört und zudem besteht hierbei auch ein Kollisionsrisiko der Spindel mit dem Werkstück.

### Aufgabe und Vorteile der Erfindung

Aufgabe der Erfindung ist es demgegenüber, eine Werkzeugmaschine bzw. eine motorisch angetriebene Werkzeugmaschineneinheit vorzuschlagen, die die zunehmenden Anforderungen an moderne Werkzeugmaschinen bzw. Werkzeugmaschineneinheiten besser erfüllt.

Diese Aufgabe wird, ausgehend von einer Werkzeugmaschineneinheit der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

In dieser Werkzeugmaschineneinheit ist die elektrische Energieübertragungseinheit, insbesondere zwei in Wirkverbindung stehende Spulen mit jeweils einem vorteilhaften Ferritkern, am der Werkzeug- und/oder Werkstückaufnahme entgegen gerichteten Bereich, insbesondere hinteren Endbereich, und/oder an der zweiten Lagereinheit bzw. am Loslager angeordnet bzw. wenigstens teilweise fixiert.

Gemäß der Erfindung wird somit eine Umkehr des bisher umgesetzten und jahrzehntelang bewährten Prinzips bei Werkzeugmaschineneinheiten verwirklicht. Das bedeutet, dass die vorliegende Erfindung nicht nur eine Abkehr, sondern vielmehr sogar im Widerspruch zum bisherigen Fest-Loslager-Prinzip bei Werkzeugmaschineneinheiten wie Motorspindeln etc. steht. Denn der Spalt zwischen den Spulen muss möglichst konstant bzw. fest eingestellt/definiert sein, um möglichst keine Fehler bzw. Beeinträchtigungen zu generieren. Die Anordnung des Spaltes zwischen den Spulen im hinteren Bereich der Werkzeugmaschineneinheit mit den temeraturbedingten größeren Längenausdehnungen von bis ca. 1mm wurde bislang unbedingt vermieden.

Die axiale Längenänderung bzw. Ausdehnung vor allem der Rotoreinheit bzw. der Rotorwelle beruht im Wesentlichen auf thermische Änderungen bzw. Wärmeverluste des Systems. Relevante axiale Änderungen bzw. Ausdehnungen der Rotoreinheit werden jedoch vergleichsweise langsam wirksam.

Darüber hinaus kann die Energieübertragungseinheit im hinteren Bereich der Werkzeugmaschineneinheit bzw. auf Seiten des der Bearbeitung/Werkzeug/Werkstück abgewandten Bereiches eine vergleichsweise beliebige Platzierung und (große) Dimensionierung der Energieübertragungseinheit realisiert werden. In diesem Bereich stört die erfindungsgemäße Energieübertragungseinheit weder die Bearbeitung, noch besteht eine Gefahr einer Kollision mit bzw. Beschädigung des zu bearbeitenden Werkstücks oder dergleichen.

Vorzugsweise ist die zweite Lagereinheit als Loslager ausgebildet, z.B. als ein Kugellager, oder als zwei Schrägkugellager in O- oder X-Anordnung. Das bedeutet, dass die zweite Lagereinheit bzw. das Loslager ausschließlich Radialkräfte bzw. keine Axialkräfte aufnehmen kann.

Vorteilhafterweise ist ein Element vorgesehen, insbesondere ein Führungselement und/oder eine Führungshülse, die/das fest mit der zweiten Lagereinheit, insbesondere einem Außenring des hinteren Lagers bzw. Loslagers verbunden ist und die/das eine axiale Lage- bzw. Längenänderung überträgt und/oder insbesondere relativ zu statischen Komponenten der Statoreinheit axial bzw. relativ zueinander verschiebbar ist.

Vorzugsweise ist ein Federelement vorgesehen, womit eine Lagefixierung des Elements, insbesondere des Führungselements und/oder der Führungshülse, in vorteilhafter Weise realisiert wird.

Erfindungsgemäß ist wenigstens eine Nachstelleinheit zum axialen Verstellen wenigstens des Führungselementes und/oder einer der Spulen der elektrischen Energieübertragungseinheit vorgesehen. Mit Hilfe der vorteilhaften Nachstelleinheit kann eine temperaturbedingte Längenänderung, insbesondere der Rotorwelle, dahingehend ausgeglichen werden, dass ein Abstand beziehungsweise ein Spalt zwischen den beiden in Wirkverbindung stehenden Spulen ausgleichbar beziehungsweise konstant gehalten werden kann. Hiermit wird eine vorteilhafte Signalübertragung beziehungsweise Qualitätssicherung und somit eine verbesserte Betriebsweise gewährleistet.

Beispielsweise kann die Nachstelleinheit als aktive Nachstelleinheit realisiert werden, wobei beispielsweise mit Hilfe einer Erfassungseinheit zur Erfassung einer Längenänderung, insbesondere der temperaturbedingten Längenänderung der Rotorwelle oder dergleichen, ein Aktuator kontrolliert beziehungsweise gesteuert werden kann, der entsprechend die zweite, mit der ersten statischen Spule in Wirkverbindung stehende Spule entsprechend (axial) nach-/ verstellt. Hiermit wird eine hohe Genauigkeit bei der Konstanthaltung des (axialen) Abstandes beziehungsweise des (in Richtung der Drehachse ausgerichteten) Spaltes zwischen den beiden in Wirkverbindung stehenden Spulen erreicht.

Vorzugsweise umfasst die Nachstelleinheit wenigstens ein Federelement. Hiermit wird der konstruktive als auch steuerungstechnische Aufwand für die Nachstellung beziehungsweise Konstanthaltung des Spaltes beziehungsweise des Abstandes zwischen den beiden in Wirkverbindung stehenden Spulen in vorteilhafter Weise verringert bzw. minimiert. Dies führt zu einer wirtschaftlich günstigen Betriebsweise und zugleich zu einer vorteilhaften Signalübertragung beziehungsweise Betriebsweise.

### Ausführungsbeispiel

Ein Ausführungsbeispiel der Erfindung ist in der Zeichnung dargestellt und wird anhand der Figuren nachfolgend näher erläutert.

Im Einzelnen zeigt:

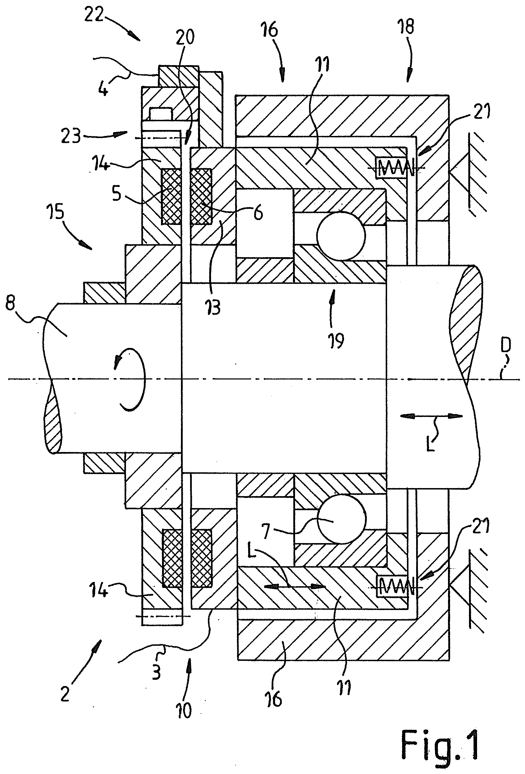

- Figur 1: ein schematischer Schnitt durch einen hinteren Bereich einer ersten Motorspindel mit einer Loslagereinheit und einer ersten elektrischen Energieübertragungseinheit gemäß der Erfindung und

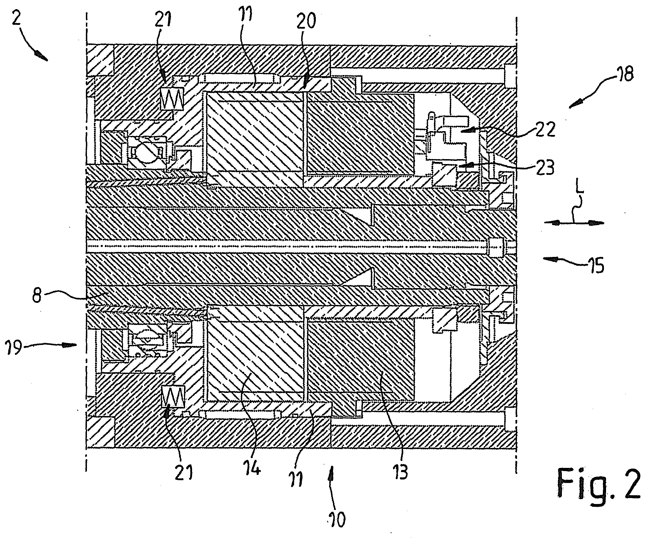

- Figur 2: ein schematischer Schnitt durch einen hinteren Bereich einer zweiten Motorspindel mit einer Loslagereinheit und einer zweiten elektrischen Energieübertragungseinheit gemäß der Erfindung.

In den Figuren sind schematisch zwei ähnliche Ausführungsformen der Erfindung dargestellt, wobei eine Rotorwelle 8 im einem nicht näher dargestellten Werkzeug/Werkstück abgewandten, sogenannten "hinteren Bereich" 18 einer Motorspindel ein hinteres Lager 19 aufweist. Das Lager 19 ist als Loslager 19 ausgebildet und über einen Führungsring 11 mit einer Statoreinheit 16 der Motorspindel verbunden.

Am Führungsring/-element 11 ist eine erste Spule 13, insbesondere eine Ferritkernspule 13 angeordnet/fixiert, die in Wirkverbindung mit einer zweiten Spule 14 beziehungsweise Ferritkernspule 14 ist. Die zweite Ferritkernspule 14 ist an der Rotorwelle 8 angeordnet/fixiert.

Im Betrieb der Motorspindel 2, d.h. bei rotierender Motorwelle 8, erwärmt sich unter anderem die Motorwelle 8, so dass eine Längenänderung L der Motorwelle 8 auftritt. Diese Längenänderung L in Richtung einer Drehachse D würde einen axialen Spalt 20 zwischen den beiden Motorspulen 13, 14 verändern bzw. vergrößern, was jedoch nachteilig für eine elektrische Signalübertragung von der einen Spule 13, 14 auf die andere Spule 13, 14 wäre. Gemäß der Erfindung erfolgt jedoch eine axiale Verstellung der "statischen" Spule 13 mittels des Führungsringes 11 sowie einer Feder 21. Vorzugsweise sind mehrere Federn 21 in Umfangsrichtung möglichst gleichmäßig verteilt angeordnet.

Bei einer insbesondere temperaturbedingten Ausdehnung der Rotorwelle 8 längs der Drehachse D wird der Innenring der Lagereinheit 19 entsprechend in Längsrichtung L verstellt, was in vorteilhafter Weise über die Wälzelemente beziehungsweise Kugeln sowie dem Außenring des Wälzlagers 19 und dem Führungsring zu einer axialen Verstellung der nichtrotierenden bzw. sog. "statischen" Spule 13 führt. Mittels der Feder 21 beziehungsweise den Federn 21 wird unter anderem eine vorteilhafte Rückstellkraft generiert beziehungsweise eine Anpresskraft des Führungsringes 11 gegen den Außenring des Wälzlagers 19.

Darüber hinaus ist ein vorteilhafter Drehgeber 22 vorgesehen, der mit der Statoreinheit 16 beziehungsweise der nichtrotierenden bzw. sog. "statischen" Spule 13 beziehungsweise dem Führungsring 11 in Wirkverbindung steht. Eine Verzahnungsstruktur 23, die die Rotoreinheit 15 umfasst, ermöglicht eine vorteilhafte Erfassung der Position der Rotorwelle 8 in Umfangsrichtung.

Beispielsweise bei einer Temperaturänderung von ungefähr 20° bis 200°C wird eine Längenänderung L von ca. 1 mm generiert. Dies würde sich nachteilig auf die Signalübertragung zwischen den beiden Spulen 13, 14 auswirken, was jedoch gemäß der Erfindung in vorteilhafter Weise unterbunden wird. Denn erfindungsgemäß wird eine nachteilige Veränderung des zu übertragenden elektrischen Signals aufgrund einer Längenänderung L der Motorwelle 8 verhindert.

Generell kann gemäß der Erfindung von der rotierenden Seite beziehungsweise von der Rotoreinheit 15 unterschiedlichste Parameter beziehungsweise Prozessparameter oder dergleichen überwacht/übermittelt werden. So kann beispielsweise die Erfindung genutzt werden für die Parameter: Stoffmenge, Magnetismus, elektromagnetische Strahlung, Lagerung, Akustik, Temperatur, Schwingung, Abstand, Kraft, Vibration, Kollision sowie Induktion und/oder dergleichen.

Auf der statischen Seite bzw. der Statoreinheit kann in vorteilhafter Weise eine Prozessanalyse beziehungsweise Auswertung/Steuerung/Regelung/Prozesskontrolle erfolgen, wobei unter anderem ein digitaler Filter, analoger Filter, eine sogenannte "B-Box" als auch eine Phasenregelschleife und/oder dergleichen verwendet werden kann.

### Bezugszeichenliste

- 2: Motorspindel
- 3: Spulenkabel
- 4: Drehgeberkabel
- 5: Ferritkern
- 6: Ferritkern
- 7: Wälzkörper
- 8: Motorwelle
- 10: Energieübertragungseinheit
- 11: Führungselement
- 13: Spule
- 14: Spule
- 15: Rotoreinheit
- 16: Statoreinheit
- 18: Endbereich
- 19: Lager
- 20: Spalt
- 21: Feder
- 22: Drehgeber
- 23: Verzahnung

- L: Längenänderung
- D: Drehachse

## Patentansprüche

1. Motorisch angetriebene Werkzeugmaschineneinheit (2) wie ein Mehrachsendrehkopf, eine Motorspindel (2), ein Drehtisch oder dergleichen mit einem Endbereich einer Werkzeug- und/oder Werkstückaufnahme, mit einer Statoreinheit (16) und einer wenigstens eine um eine Drehachse drehbare Rotorwelle (8) aufweisende Rotoreinheit (15), wobei die Rotoreinheit (15) wenigstens eine im Endbereich einer Werkzeug- und/oder Werkstückaufnahme angeordnete, erste Lagereinheit sowie eine am entgegen gerichteten Endbereich (18) angeordnete, zweite Lagereinheit (19) zum Lagern der Rotorwelle (8) in der Statoreinheit (16) umfasst, wobei wenigstens eine elektrische Energieübertragungseinheit zur Übertragung von elektrischer Energie zwischen der Statoreinheit (16) und der Rotoreinheit (15) vorgesehen ist, wobei die elektrische Energieübertragungseinheit (10) wenigstens zwei in Wirkverbindung stehende Spulen (13, 14) aufweist, wobei die elektrische Energieübertragungseinheit (10) am der Werkzeug- und/oder Werkstückaufnahme entgegen gerichteten Endbereich (18) und an der zweiten Lagereinheit (19) angeordnet ist, dass ein in Richtung der Drehachse (D) ausgerichteter Spalt (20) bzw. axialer Abstand (20) zwischen den beiden in Wirkverbindung stehenden Spulen (13,14) vorgesehen ist,
**dadurch gekennzeichnet, dass** wenigstens eine Nachstelleinheit (21) zum axialen Verstellen wenigstens einer der Spulen (13, 14) der elektrischen Energieübertragungseinheit (10) vorgesehen ist.

2. Werkzeugmaschineneinheit nach Anspruch 1, **dadurch gekennzeichnet, dass** zum Führen der zweiten Lagereinheit (19) wenigstens ein Führungselement (11) an der zweiten Lagereinheit (19) angeordnet ist.

3. Werkzeugmaschineneinheit nach einem der vorgenannten Ansprüche, **dadurch gekennzeichnet, dass** die elektrische Energieübertragungseinheit (10) wenigstens teilweise und/oder wenigstens eine der Spulen (13) der elektrischen Energieübertragungseinheit (10) am Führungselement (11) und/oder an der zweiten Lagereinheit (19) angeordnet und/oder fixiert ist.

4. Werkzeugmaschineneinheit nach dem vorgenannten Anspruch, **dadurch gekennzeichnet, dass** wenigstens eine Nachstelleinheit (21) zum axialen Verstellen wenigstens des Führungselements (11)vorgesehen ist.

5. Werkzeugmaschineneinheit nach dem vorgenannten Anspruch, **dadurch gekennzeichnet, dass** die Nachstelleinheit (21) wenigstens ein Federelement (21) umfasst.

6. Werkzeugmaschineneinheit nach einem der vorgenannten Ansprüche, **dadurch gekennzeichnet, dass** die elektrische Energieübertragungseinheit (10) wenigstens teilweise eine Drehgebervorrichtung (22) zum Erfassen der Drehposition der Rotorwelleneinheit (15) umfasst.

7. Werkzeugmaschineneinheit nach einem der vorgenannten Ansprüche, **dadurch gekennzeichnet, dass** die elektrische Energieübertragungseinheit (10) wenigstens eine Detektionsstruktur für die Drehgebervorrichtung (22) aufweist.

8. Werkzeugmaschineneinheit nach Anspruch 7, **dadurch gekennzeichnet, dass** die Detektionsstruktur der elektrischen Energieübertragungseinheit (10) in Wirkverbindung mit einem Sensor der Drehgebervorrichtung (22) ist.

9. Werkzeugmaschine mit einer Werkzeugmaschineneinheit (2) nach einem der vorgenannten Ansprüche.

## Claims

1. A motor-driven machine tool unit (2) such as a multi-axis rotary head, a motor spindle (2), a turntable or the like with an end portion of a tool and/or workpiece holder, with a stator unit (16), and a rotor unit (15) comprising at least one rotor shaft (8) rotatable about a rotation axis, wherein the rotor unit (15) comprises at least one first bearing unit arranged in the end region of a tool and/or workpiece holder, and a second bearing unit (19) for bearing the rotor shaft (8) in the stator unit (16), said second bearing unit being arranged in the opposite end portion (18), wherein at least one electrical energy transmission unit is provided for transmitting electrical energy between the stator unit (16) and the rotor unit (15), wherein the electrical energy transmission unit (10) comprises at least two operatively connected coils (13, 14), wherein the electrical energy transmission unit (10) is arranged on the end portion (18) opposite the tool and/or workpiece holder and on the second bearing unit (19),
such that a gap (20) or axial spacing (20) aligned in the direction of the axis of rotation (D) is provided between the two operatively connected coils (13, 14), **characterised in that** at least one adjustment unit (21) is provided for the axial displacement of at least one of the coils (13, 14) of the electrical energy transmission unit (10).

2. The machine tool unit according to claim 1, **characterised in that** at least one guide element (11) is arranged on the second bearing unit (19) for guiding the second bearing unit (19).

3. The machine tool unit according to one of the preceding claims, **characterized in that** the electrical energy transfer unit (10) is at least partially arranged on and/or fixed to, and/or at least one of the coils (13) of the electrical power transfer unit (10) is arranged on and/or fixed to, the guide element (11) and/or the second bearing unit (19).

4. The machine tool unit according to the preceding claim, **characterized in that** at least one adjusting unit (21) is provided for the axial adjustment of at least the guide element (11).

5. The machine tool unit according to the preceding claim, **characterized in that** the adjusting unit (21) comprises at least one spring element (21).

6. The machine tool unit according to one of the preceding claims, **characterized in that** the electrical energy transfer unit (10) comprises, at least in part, a rotary encoder device (22) for recording the rotational position of the rotor shaft unit (15).

7. The machine tool unit according to one of the preceding claims, **characterized in that** the electrical energy transfer unit (10) has at least one detection structure for the rotary encoder device (22).

8. The machine tool unit according to claim 7, **characterized in that** the detection structure of the electrical energy transfer unit (10) is in operative connection with a sensor of the rotary encoder device (22).

9. A machine tool having a machine tool unit (2) according to one of the preceding claims.

## Revendications

1. Unité de machine-outil à moteur (2) telle qu'une tête rotative à plusieurs axes, une broche à moteur (2), une plaque tournante ou similaire comprenant une zone d'extrémité d'un porte-outil et/ou porte-pièce, comprenant une unité de stator (16) et au moins une unité de rotor (15) présentant un arbre de rotor (8) pouvant tourner autour d'un axe de rotation, l'unité de rotor (15) comprenant au moins une première unité de palier disposée dans la zone d'extrémité d'un porte-outil et/ou porte-pièce ainsi qu'une seconde unité de palier (19) disposée sur la zone d'extrémité de palier (18) opposée pour supporter l'arbre de rotor (8) dans l'unité de stator (16), au moins une unité de transmission d'énergie électrique servant à transmettre de l'énergie électrique entre l'unité de stator (16) et l'unité de rotor (15), l'unité de transmission d'énergie électrique (10) comprenant au moins deux bobines (13, 14) en liaison active, l'unité de transmission d'énergie électrique (10) étant disposée sur la zone d'extrémité (18) opposée au porte-outil et/ou porte-pièce et sur la seconde unité de palier (19),
un interstice (20) ou un espacement axial (20) orienté dans la direction de l'axe de rotation (D) étant ménagé entre les deux bobines (13, 14) en liaison active, **caractérisée en ce qu'**au moins une unité de réglage (21) sert au déplacement axial d'au moins l'une des bobines (13, 14) de l'unité de transmission d'énergie électrique (10).

2. Unité de machine-outil selon la revendication 1, **caractérisée en ce que** pour guider la seconde unité de palier (19), au moins un élément de guidage (11) est disposé sur la seconde unité de palier (19).

3. Unité de machine-outil selon l'une quelconque des revendications précédentes, **caractérisée en ce que** l'unité de transmission d'énergie électrique (10), au moins partiellement, et/ou au moins une des bobines (13) de l'unité de transmission d'énergie électrique (10) est agencée et/ou fixée sur l'élément de guidage (11) et/ou sur la deuxième unité de palier (19).

4. Unité de machine-outil selon la revendication précédente, **caractérisée en ce qu'**au moins une unité de réglage (21) est prévue pour régler au moins l'élément de guidage (11) dans le sens axial.

5. Unité de machine-outil selon la revendication précédente, **caractérisée en ce que** l'unité de réglage (21) comprend au moins un élément à ressort (21).

6. Unité de machine-outil selon l'une quelconque des revendications précédentes, **caractérisée en ce que** l'unité de transmission d'énergie électrique (10) comprend au moins partiellement un dispositif codeur rotatif (22) destiné à détecter la position de rotation de l'unité d'arbre de rotor (15).

7. Unité de machine-outil selon l'une quelconque des revendications précédentes, **caractérisée en ce que** l'unité de transmission d'énergie électrique (10) présente au moins une structure de détection pour le dispositif codeur rotatif (22).

8. Unité de machine-outil selon la revendication 7, **caractérisée en ce que** la structure de détection de l'unité de transmission d'énergie électrique (10) est en liaison fonctionnelle avec un capteur du dispositif codeur rotatif (22).

9. Machine-outil avec une unité de machine-outil (2) selon l'une quelconque des revendications précédentes.
